# EUROPÄISCHE PATENTSCHRIFT

(11) **EP 2 996 469 B1**
(45) Veröffentlichungstag und Bekanntmachung des Hinweises auf die Patenterteilung: **05.07.2017**
(21) Anmeldenummer: 14724745.6
(22) Anmeldetag: 16.05.2014
(51) Int. Cl.: A01N 25/30, A01N 43/16, A01N 59/14, A01N 25/04, A01N 55/08, C05D 9/02, C05G 3/00

(54) **PFLANZENSTÄRKUNGSMITTEL ENTHALTEND EIN TOCOPHEROL UND EINE BORVERBINDUNG**
PLANT VITALISER CONTAINING A TOCOPHEROL AND A BORON COMPOUND
FORTIFIANT POUR PLANTES COMPRENANT UN TOCOPHÉROL ET UN COMPOSÉ DE BORE

(30) Priorität: 17.05.2013 EP 13168252
(43) Veröffentlichungstag der Anmeldung: 23.03.2016
(73) Patentinhaber: COMPO Expert GmbH, 48157 Münster (DE)
(72) Erfinder: EBERT, Georg, 14469 Potsdam (DE); JAEGER, Christian, 49145 Münster (DE)
(74) Vertreter: Reitstötter Kinzebach
(86) Internationale Anmeldenummer: PCT/EP2014/060086
(87) Internationale Veröffentlichungsnummer: WO 2014/184346

(56) Entgegenhaltungen:
- DE-A1- 4 437 945
- DE-A1- 19 904 703
- DATABASE CA [Online] CHEMICAL ABSTRACTS SERVICE, COLUMBUS, OHIO, US; SHI, CHENHUA: "Liquid boron fertilizer and preparation method thereof", XP002711775, gefunden im STN Database accession no. 154:63951 & CN 101 913 948 A (SHANGHAI JINMEISHENG FERTILIZER SCIENCE AND TECHNOLOGY CO., LTD., PEOP) 15. Dezember 2010 (2010-12-15)

## Beschreibung

Die vorliegende Erfindung betrifft ein Pflanzenstärkungsmittel in Form einer Formulierung, das Tocopherol oder ein Derivat eines Tocopherols enthält, sowie dessen Verwendung zur Erhöhung der Toleranz von Nutzpflanzen gegenüber Stressereignissen, insbesondere gegenüber chemisch induziertem Stress, kälteinduziertem Stress, durch Trockenheit induziertem Stress oder Licht-induziertem Stress.

Kulturpflanzen unterliegen neben einer Bedrohung durch Krankheiten oder Schädlinge auch zunehmend sogenannten abiotischen Stressfaktoren, von denen die wichtigsten extreme Temperaturen (kälteinduzierter Stress durch Frost, Trockenheit bei hohen Temperaturen), starke Sonneneinstrahlung (Licht-induzierter Stress durch UV-Anteile im Sonnenlicht) sowie Wassermangel sind. Frost, besonders im Frühjahr bei einsetzendem Pflanzenwachstum, kann durch Erfrieren des Pflanzengewebes ebenso erhebliche Ernteausfälle bzw. Qualitätsverluste hervorrufen. Intensive Sonneneinstrahlung, insbesondere während der Fruchtreife von Obstarten, führt zu wirtschaftlich bedeutsamen Schäden an Früchten.

Alle abiotischen Stressfaktoren bewirken neben den direkten Schadeinflüssen (z. B. Eisbildung im Gewebe bei Frost) eine sogenannte oxidative Stressreaktion der Pflanze. Als unmittelbare Folge der Stresseinwirkung wird die Bildung reaktionsfähiger Sauerstoffverbindungen (ROS) sowie von freien chemischen Radikalen im Pflanzengewebe gesehen, die in Kettenreaktionen Bestandteile der Pflanzenzelle angreifen und durch Oxidation zerstören. Besonders empfindlich sind die Zellmembranen, wie z. B. die Thylakoidmembran der Chloroplasten. Als Folge dessen wird u. a. die Photosyntheseleistung herabgesetzt und es kommt zu deutlichen Ertragsverlusten.

Ein weiteres Problem stellen Stressereignisse dar, die durch Umwelttoxine wie Ozon hervorgerufen werden oder aus der Applikation von Pflanzenschutzwirkstoffen wie Fungizide, Insektizide, Bakterizide, Herbizide, Akarizide oder Wachstumsregulatoren oder aus der Anwendung bestimmter Düngemittel resultieren (chemisch induzierter Stress), insbesondere wenn derartige Stressereignisse zusammen mit anderen abiotischen Stressereignissen erfolgen.

Wie bereits dargestellt führen alle der vorgenannten Stressereignisse zu deutlichen Ertragsverlusten. Zudem weisen Früchte als Folge solcher Stressereignisse oftmals nekrotische oder verkorkende Stellen auf, so dass diese dann nur noch teilweise handelsfähig oder zu hochwertigen Verarbeitungszwecken nicht mehr nutzbar sind. Auch die Lagerfähigkeit und Lagerdauer von Früchten kann aufgrund solcher Stressereignisse eingeschränkt sein.

Im Sinne einer hohen Qualitäts- und Erntemengensicherung besteht daher aus der Sicht von agrarwirtschaftlichen und Pflanzenanbau-Betrieben ein großes Interesse, die Pflanzen durch Stärkung ihrer eigenen Abwehrmechanismen oder durch Inhibierung der direkten Schadstoffwirkungen vor Schäden durch abiotische Stressfaktoren und Toxine zu schützen.

Aus der WO 89/11 795 ist ein Verfahren zur Erhöhung der Widerstandsfähigkeit von Pflanzen unter Verwendung von umweltverträglichen Antioxidantien, wie z. B. von Ascorbinsäure oder Tocopherolen bekannt. Als Wirkprinzip wird angenommen, dass die Antioxidantien als sog. "exo-elicitoren" eine "protective response" (Immunantwort) hervorrufen, wodurch sich die Widerstandsfähigkeit gegenüber z. B. Pflanzenschutzmitteln oder Umwelttoxinen verbessern soll, wodurch der Toxizitätsgrad von Pflanzenschutzmitteln verringert wird. In der genannten Schrift werden Ergebnisse dargestellt, die eine unmittelbare Beteiligung von Antioxidantien an Stressabwehrreaktionen dokumentieren. Die Ausübung der Schutzfunktion ist dabei direkt von der Konzentration des antioxidativen Wirkstoffes in der pflanzlichen Zelle abhängig. Voraussetzung für ein solches Wirkprinzip ist aber eine gute Aufnahme der Antioxidantien, z. B. von Tocopherolen durch die Pflanze.

DE 4437945 beschreibt ein Pflanzenstärkungsmittel in Form einer Formulierung, die eine Verbindung aus der Vitamin E-Gruppe, z. B. α-Tocopherol, und eine oberflächenaktive Substanz enthält.

Die DE 19904703 beschreibt die gemeinsame Applikation von Tocopherol enthaltenden Pflanzenstärkungsmitteln mit Methoxyzimtsäure oder deren Derivaten zur Verbesserung der Toleranz der Pflanzen gegenüber durch UV-Strahlung induziertem Stress. Die Methoxyzimtsäure(derivate) werden zusammen mit dem Tocopherol enthaltenden Pflanzenstärkungsmittel im Tank-Mix eingesetzt. CN 101913948 offenbart, dass ein Düngemittel enthaltend Borsäure, Ethanolamin und Wasser die Widerstandsfähigkeit von Pflanzen gegenüber Stress erhöhen kann.

Der Schutz von Pflanzen vor den oben genannten Stressfaktoren durch die aus dem vorgenannten Stand der Technik bekannten Maßnahmen ist jedoch nicht immer zufriedenstellend, insbesondere wenn die Pflanzen auf nährstoffarmen oder leichten Böden angebaut werden. Aufgabe der vorliegenden Erfindung ist daher die Bereitstellung von Formulierungen, die einen verbesserten Schutz der Pflanzen vor Stressereignissen, insbesondere vor abiotischem Stress (Licht-, Trockenheit oder Kälte-induzierter Stress) und/oder durch Toxine hervorgerufenem Stress (chemisch induzierter Stress) gewährleisten. Die Formulierung sollte außerdem lagerstabil und zudem leicht handhabbar sein und beim Verdünnen mit Wasser auf die gewünschte Anwendungskonzentration eine gleichmäßige Verteilung der Bestandteile in der Spritzbrühe gewährleisten.
Diese und weitere Aufgaben werden durch die nachfolgend näher beschriebenen borhaltigen Formulierungen gelöst.
Die vorliegende Erfindung betrifft daher Pflanzenstärkungsmittel in Form von Formulierungen, welche die folgenden Komponenten A, B und C enthalten:
a) wenigstens ein Tocopherol oder Derivat eines Tocopherols (Komponente A);
b) wenigstens einen nichtionischen Emulgator (Komponente B); und
c) wenigstens eine wasserlösliche Borverbindung (Komponente C).
Die erfindungsgemäßen Formulierungen sind mit einer Reihe von Vorteilen verbunden. Sie zeichnen sich zum einen durch eine verbesserte Wirkung hinsichtlich des Schutzes der behandelten Pflanzen bei stressbedingter Belastung aus. Insbesondere wird eine verbesserte protektive Wirkung gegenüber Schädigungen in Folge eines Wasserverlusts bzw. einer Austrocknung der Pflanze, sie es durch Hitze, Trockenheit oder Kälteereignisse, erzielt. Zudem führt die Behandlung mit den erfindungsgemäßen Pflanzenstärkungsmitteln zu einer verbesserten Fruchtbarkeit, insbesondere bei Obstgehölzen und Fruchtgemüsen, beispielsweise zu einem verbesserten Fruchtansatz und/oder einer verbesserten Fruchtentwicklung, beispielsweise bei Tomate oder Paprika. Daher führt die Behandlung mit den erfindungsgemäßen Pflanzenstärkungsmitteln zu einer Sicherung und Steigerung der Obst- bzw. Fruchterträge. Häufig weisen die behandelten Pflanzen auch eine bessere Pflanzenfitness gegenüber Krankheiten und Schädlingen auf. Die hier genannten Vorteile sind insbesondere bei intensivem Anbau und/oder Anbau auf nährstoffarmen, leichten Böden ausgeprägt.

Gegenstand der Erfindung ist daher auch die Verwendung der erfindungsgemäßen Pflanzenstärkungsmittel zur Erhöhung der Toleranz von Nutzpflanzen gegenüber Stressereignissen, insbesondere gegenüber chemisch induziertem Stress, kälteinduziertem Stress, durch Trockenheit induziertem Stress oder Licht-induziertem Stress.

Gegenstand der Erfindung ist auch ein Verfahren zur Behandlung von Pflanzen, insbesondere von Nutzpflanzen, bei dem man die Pflanzen oder ihren Lebensraum mit einem erfindungsgemäßen Pflanzenstärkungsmittel behandelt.

Die erfindungsgemäßen Formulierungen enthalten als Komponente A wenigstens ein Tocopherol oder Tocopherol-Derivat. Unter Tocopherol und seinen Derivaten versteht die Verbindungen der Vitamin E-Gruppe, d. h. Tocopherole, Tocomonoenole, marine Tocopherole und Tocotrienole sowie die Ester dieser Verbindungen, insbesondere die Acetate. Als Komponente A sind Tocopherole wie α-Tocopherol, β-Tocopherol, γ-Tocopherol und δ-Tocopherol sowie deren Ester, insbesondere deren Acetate bevorzugt. Insbesondere umfasst die Komponente A α-Tocopherol, speziell das natürlich vorkommende RRR-Isomer des α-Tocopherols oder eine Mischung des α-Tocopherols, insbesondere des RRR-Isomers, mit einem oder mehreren davon verschiedenen Verbindungen der Vitamin E-Gruppe, insbesondere Mischungen des α-Tocopherols, insbesondere des RRR-Isomers, mit einem oder mehreren unter α-Tocopherol, β-Tocopherol, γ-Tocopherol, δ-Tocopherol und deren Estern, insbesondere deren Acetaten ausgewählten Verbindungen der Vitamin E-Gruppe.

In der Regel beträgt Gesamtkonzentration an Komponente A in erfindungsgemäßen Formulierungen 50 bis 500 g/L, insbesondere 100 bis 400 g/L.

Die erfindungsgemäßen Formulierungen enthalten als Komponente B wenigstens eine nichtionische oberflächenaktive Substanz, die vorzugsweise unter den Emulgatoren der folgenden Klassen B.1 bis B.9 und deren Mischungen ausgewählt ist:
B.1 poly-C₂-C₃-alkoxylierte C₃-C₁₈-Alkylphenole, vorzugsweise solche mit einem Alkoxylierungsgrad in einem Bereich von 2 bis 100, insbesondere von 3 bis 80, speziell von 3 bis 50, beispielsweise polyethoxyliertes Octylphenol, polyethoxyliertes Nonylphenol oder polyethoxyliertes Dodecylphenol;
B.2 poly-C₂-C₃-alkoxylierte C₁₀-C₂₂-Fettalkohole, insbesondere poly-C₂-C₃-alkoxylierte C₁₀-C₂₂-Alkanole und poly-C₂-C₃-alkoxylierte C₁₀-C₂₂-Alkenole, jeweils mit einem Alkoxylierungsgrad in einem Bereich von 2 bis 100, insbesondere von 3 bis 80, insbesondere von 4 bis 50, speziell poly-C₂-C₃-alkoxylierte C₁₄-C₂₀-Alkanole, wie polyethoxylierter Laurylalkohol, polyethxoylierter Myristylalkohol, polyethoxylierter Palmitylalkohol, polyethoxylierter Cetylalkohol, polyethoxylierter Cetylstearylalkohol, polyethoxylierter Stearylalkohol und polyethoxylierter Oleylalkohol sowie die entsprechenden poly(ethoxy-co-propoxylierten) C₁₀-C₂₂-Alkanole und C₁₀-C₂₂-Alkenole;
B.3 poly-C₂-C₃-alkoxylierte C₁₀-C₂₂-Fettsäureester, insbesondere polyethoxylierte C₁₀-C₂₂-Fettsäureester, insbesondere poly-C₂-C₃-alkoxylierte C₁₀-C₂₂-Fettsäuremono- und -diglyceride und deren Mischungen;
B.4 Copolymere von Propylenoxid und Ethylenoxid, insbesondere Blockcopolymere, speziell solche mit einem zentralen Polypropylenblock und zwei Polyethylenoxid-Blöcken, insbesondere solche mit einem Molekulargewicht im bereich von 1000 bis 20000 Dalton (Zahlenmittel);
B.5 Sucroglyceride, auch als Zuckerglyceride bezeichnet, d. h. Umesterungsprodukte von Festtsäuretriglyceriden, insbesondere von C₁₀-C₁₂-Fettsäuretriglycideriden mit Glukose oder Saccharose, beispielsweise der Emulgator vom Typ E474;
B.6 polyethoxylierte C₁₀-C₁₈-Fettsäureester von Sorbitan, insbesondere solche mit einem Ethoxylierungsgrad von 10 bis 50, beispielsweise Polyoxyethylen(20)-sorbitanmonolaurat, -monopalmitat, -monooleat, -monostearat und -tristearat;
B.7 polyethoxylierte Lanolinalkohole (polyethoxyliertes Lanolin), beispeilsweise polyethoxylierte Lanolinalkohole mit einem Etholkoxylierungsgrad in einem Bereich von 10 bis 100, bevorzugt von 30 bis 90, insbesondere von 40 bis 85,
B.8 C₈-C₁₆-Alkylpolyglucoside, sogenannte APG's, insbesondere solche mit einem C₈-C₁₄-Alkylrest und 1 bis 5 Glucoseeinheiten, beispielsweise Octylpolyglycoside, 2-Ethylhexylpolyglycoside, Decylpolyglycoside, Dodecylpolyglycoside und Tetradecylpolygycoside beispielsweise solche mit 1 bis 3 Glukoseeinheiten;
B.9 poly-C₂-C₃-alkoxylierte Triglyceride aliphatischer C₁₀-C₂₂-Hydroxycarbonsäuren, beispielsweise solche mit einem Alkoxylierungsgrad in einem Bereich von 10 bis 100, insbesondere von 15 bis 70, speziell von 20 bis 60, insbesondere polyethoxylierte Triglyceride aliphatischer C₁₀-C₂₂-Hydroxycarbonsäuren, speziell Rizinusölethoxylate, insbesondere Rizinusölethoxylate mit einem Ethoxylierungsgrad in einem Bereich von 10 bis 100, insbesondere von 15 bis 70, speziell von 20 bis 60.

Unter den vorgenannten poly-C₂-C₃-alkoxylierten Emulgatoren versteht man Substanzen, die wenigstens eine Polyoxy-C₂-C₄-alkylengruppe aufweisen. Der Alkoxylierungsgrad der poly-C₂-C₃-alkoxylierten Emulgatoren beschreibt die mittlere (Zahlenmittel) Anzahl an C₂-C₃-Oxyalkylengruppen, d. h. Gruppen der Formel [Z-O] in Polyoxy-C₂-C₃-alkylengruppen, welche der Molzahl an C₂-C₃-Oxiran pro Mol OH-Gruppen der polyalkoxylierten Verbindung entspricht. In diesem Zusammenhang gibt das Präfix Cₙ-Cₘ die mögliche Anzahl an Kohlenstoffatomen im Molekül bzw. in dem damit bezeichneten Rest an, d. h. Cₙ-Cₘ-Alkyl stellt eine Sammelbezeichnung für lineare oder verzweigte Alkylreste dar, die n bis m Kohlenstoffatome aufweisen können, d. h. C₃-C₁₈-Alkyl steht für die Gruppe der Alkylreste, die 3 bis 18 C-Atome aufweisen, beispielsweise für Propyl, Butyl, Pentyl, Hexyl, Heptyl, Octyl, Nonyl, Decyl, Undecyl, Dodecyl, Tridecyl, Tetradecyl, Hexadecyl, Octadecyl, Eicosyl sowie die verzweigten Isomere der vorgenannten Reste. Die Bezeichnung C₁₀-C₂₂-Alkanole steht somit für die Gruppe der gesättigten aliphatischen Alkohole, insbesondere der Fettalkohole, die 10 bis 22 Kohlenstoffatome aufweisen, wie Decylalkohol, Laurylalkohol, Myristylakohol, Cetylalkohol, Stearylalkohol, Eicosanol und Behenylalkohol. Die Bezeichnung Cetylstearylalkohol steht für ein Gemisch aus C₁₆/C₁₈-Fettalkoholen. Die Bezeichnung C₁₀-C₂₂-Alkenole steht somit für die Gruppe der ungesättigten aliphatischen Alkohole, 10 bis 22 Kohlenstoffatome aufweisen, wie Oleylalkohol. Der Begriff C₁₀-C₂₂-Fettsäure steht somit für die Gruppe der Alkancarbonsäuren und Alkencarbonsäuren, insbesondere der nativen Alkancarbonsäuren, die 10 bis 22 C-Atome aufweisen. Der Begriff C₁₀-C₂₂-Hydroxycarbonsäure steht somit für die Gruppe der Hydroxycarbonsäuren, insbesondere der aliphatischen gesättigten und einfach ungesättigten Hydroxyfettsäuren, die 10 bis 22 C-Atome aufweisen, beispielsweise für Ricinolsäure (12-Hydroxyoctadec-9-ensäure).

Unter den vorgenannten Substanzen sind die Polyethoxylate, d. h. die durch Umsetzung mit Ethylenoxid erhaltenen Substanzen, wie auch die Poly(ethoxylat-copropoxylate), also die Umsetzungsprodukte der vorgenannten Substanzen mit Ethylenoxid und Propylenoxid, bevorzugt.

In bevorzugten erfindungsgemäßen Pflanzenstärkungsmitteln umfasst die Komponente B wenigstens eine nichtionische oberflächenaktive Substanz aus der Gruppe B.9, insbesondere wenigstens ein poly-C₂-C₃-alkoxyliertes Rizinusöl, vorzugsweise ein solches mit einem Alkoxylierungsgrad in einem Bereich von 10 bis 100, insbesondere von 15 bis 70, speziell von 20 bis 60, speziell wenigstens ein Rizinusölethoxylat, ganz speziell wenigstens ein Rizinusölethoxylat mit einem Ethoxylierungsgrad in einem Bereich von 10 bis 100, insbesondere von 15 bis 70, speziell von 20 bis 60, z. B. ein Rizinusölethoxylat mit einem Ethoxylierungsgrad von 40. Gegebenenfalls umfasst die Komponente B ein oder mehrere weitere nichtionische Tenside aus den Gruppen B.1 bis B.8. Insbesondere macht die nichtionische oberflächenaktive Substanz aus der Gruppe B.9 wenigstens 50 Gew.-%, insbesondere wenigstens 80 Gew.-% der Komponente B aus. Speziell ist die oberflächenaktive Substanz aus der Gruppe B.9 alleiniger Bestandteil der Komponente B.

Die erfindungsgemäßen Pflanzenstärkungsmittel enthalten die Komponente B vorzugsweise in einer solchen Menge, dass das Gewichtsverhältnis von Komponente A zu Komponente B im Bereich von 10:1 bis 1:1, insbesondere im Bereich von 3:1 bis 1:1 liegt. Vorzugsweise enthalten die erfindungsgemäßen Pflanzenstärkungsmittel die Komponente B in einer Konzentration von 50 bis 400 g/L, insbesondere 100 bis 300 g/L.

Die Komponente C der erfindungsgemäßen Pflanzenstärkungsmittel ist vorzugsweise unter Alkalimetalboraten, insbesondere Natriumorthoborat oder Natriummetaborat, Borsäure, wie Orthoborsäure oder Oligoborsäuren mit Oligomerisierungsgraden von 2 bis 10, und Borsäureestern, beispielsweise Borsäureestern mit C₁-C₄-Alkanolen, wie Methanol oder Ethanol, oder Borsäureestern mit C₂-C₄-Aminoalkanolen wie Borethanolamin (Monoester der Borsäure mit Ethanolamin: Cas-Nr. 10377-81-8, EINECS-Nummer: 233-829-3). Besonders bevorzugt umfasst oder ist die Komponente C wenigstens eine unter Borsäureestern mit C₂-C₄-Aminoalkanolen, insbesondere den Mono- und Diestern wie Borethanolamin ausgewählte Substanz.

Die erfindungsgemäßen Pflanzenstärkungsmittel enthalten die Komponente A und die Komponente C vorzugsweise in einem solchen Mengenverhältnis, dass der Gewichtsanteil der Komponente A zu dem Borgehalt der Komponente C, gerechnet als B₂O₃, im Bereich von 1 : 2 bis 5 : 1, insbesondere im Bereich von 3 : 4 bis 4 : 1 liegt. Die Borkonzentration in den erfindungsgemäßen Zusammensetzungen, gerechnet als elementares Bor liegt vorzugsweise im Bereich von 5 bis 50 g/L, insbesondere 10 bis 40 g/L. Vorzugsweise enthält die Zusammensetzung die Komponente C in einer Konzentration von 50 bis 400 g/L.

Neben den vorgenannten Komponenten A, B und C können die erfindungsgemäßen Pflanzenstärkungsmittel auch einen oder mehrere UV-Absorber enthalten (im Folgenden Komponente D). Bevorzugte UV-Absorber sind solche auf Basis von Phenylpropanoiden, wie Zimtsäure und Zimtsäurederivate, d. h. Verbindungen, die eine Zimtsäurestruktureinheit aufweisen, aber auch Coniferylalkhol, Safrol, Umbeliferon und Reservatrol. Bevorzugte UV-Absorber sind Zimtsäure und Zimtsäurederivate, insbesondere solche, in denen die Zimtsäure bzw. das Zimtsäurederivat am Phenylring wenigstens eine Methoxygruppe aufweist, die vorzugsweise in der 3- oder 4-Position angeordnet ist (sogenannte Methoxyzimtsäure- und Methoxyzimtsäurederivate). Geeignete Zimtsäurederivate bzw. Methoxyzimtsäurederivate sind vor allem die C₁-C₂₀-Alkylester, insbesondere die C₄-C₁₈-Alkylester. Besonders bevorzugte UV-Absorber sind solche, die durch die folgende Formel D.1 beschrieben werden, einschließlich deren E- und Z-Isomere:

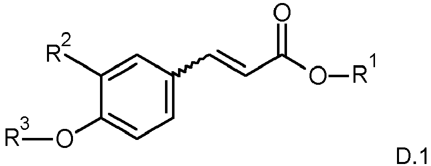

In Formel D.1 steht R¹ für Wasserstoff oder C₁-C₂₀-Alkyl, insbesondere für C₄-C₁₈-Alkyl; R² steht für Wasserstoff, Methoxy oder Hydroxy und insbesondere für Wasserstoff; R³ steht für Wasserstoff oder Methyl. Beispiele für geeignete Verbindungen der Formel D.1 sind Ferulasäure (R¹ = R³ = Wasserstoff, R² = Methoxy) sowie 4-Methoxyzimtsäure und deren C₄-C₁₈-Alkylester (Verbindungen der Formel D.1 mit R¹ = C₄-C₁₈-Alkyl, R² = Wasserstoff, R³ = Methyl), beispielsweise der Isoamylester oder der 2-Ethylhexylester der 4-Methoxyzimtsäure sowie Gemische davon.

Sofern erwünscht, enthalten die erfindungsgemäßen Pflanzenstärkungsmittel die Komponente D in einer Konzentration von 50 bis 250 g/L.

Die erfindungsgemäßen Pflanzenstärkungsmittel können wässrig oder nicht-wässrige formuliert sein. In einer bevorzugten Ausführungsform sind erfindungsgemäßen Pflanzenstärkungsmittel nicht-wässrige Formulierungen, d. h. ihr Wassergehalt beträgt nicht mehr als 100 g/L, insbesondere nicht mehr als 70 g/L, bezogen auf das Gesamtgewicht der Formulierung. Etwaige Wassermengen resultieren in der Regel aus den nicht-wässrigen Einsatzstoffen, wie Borkomponente oder Lösungsmittel E.

In bevorzugten Ausgestaltungen enthalten die erfindungsgemäßen Pflanzenstärkungsmittel neben den vorgenannten Bestandteilen A, B, C und gegebenenfalls D wenigstens ein polares organisches Lösungsmittel als Komponente E.

Beispiele für derartige polare organische Lösungsmittel sind C₂-C₆-Alkylenglykole, wie Ethylenglykol, Propylenglykol und Butandiol, Glycerin, Benzylalkohol, Dimethylsulfoxid, Hydroxy-C₂-C₄-alkylester aliphatischer C₁-C₄-Carbonsäuren, insbesondere Hydroxyethylester und Hydroxypropylester der Essigsäure oder der Propionsäure, wie 2-Hydroxyethylacetat, 2-Hydroxyethylpropionat, 2-Hydroxypropylacetat, 3-Hydroxypropylacetat, 2-Hydroxypropylpropionat oder 3-Hydroxypropylpropionat, C₁-C₄-Alkoxy-C₂-C₄-alkylester aliphatischer C₁-C₄-Carbonsäuren, insbesondere Methoxyethylester, Ethoxyethylester, Methoxypropylester und Ethoxypropylester der Essigsäure oder der Propionsäure, wie 2-Methoxyethylacetat, 2-Methoxyethylpropionat, 2-Methoxypropylacetat, 3-Methoxypropylacetat, 2-Ethoxyethylacetat, 2-Ethoxyethylpropionat, 2-Ethoxypropylacetat oder 3-Ethoxypropylacetat, Milchsäure-C₁-C₄-alkylester, wie Methyllactat und Ethyllactat sowie Oligo-C₂-C₄-alkylenglycolester aliphatischer C₁-C₁₀-Carbonsäuren, insbesondere Oligoethylenglycolester und Oligopropylenglycolester der Essigsäure, wie Diethylenglycolmonoacetat, Dipropylenglycolmonoacetat oder Triethylenglycolmonoacetat.

Sofern vorhanden, macht die Gesamtmenge an polaren organischen Lösungsmitteln in der Regel wenigstens 50 g/L aus und wird vorzugsweise 500 g/L nicht überschreiten, jeweils bezogen auf das Gesamtvolumen der Formulierung. Insbesondere beträgt die Gesamtkonzentration an polaren organischen Lösungsmitteln 100 bis 400 g/L.

Für die Erfindung hat es sich als vorteilhaft erwiesen, wenn die Formulierung Dimethylsulfoxid enthält. Dementsprechend betrifft eine bevorzugte Gruppe an Ausführungsformen der Erfindung solche Pflanzenstärkungsmittel, in denen die Komponente E Dimethylsulfoxid umfasst. In dieser Gruppe der Ausführungsformen kann Dimethylsulfoxid alleiniges polares organisches Lösungsmittel sein. Geeignet sind auch Gemische von Dimethylsulfoxid mit einem oder mehreren davon verschiedenen polaren organischen Lösungsmitteln. In diesen Ausführungsformen enthalten die erfindungsgemäßen Pflanzenstärkungsmittel Dimethylsulfoxid vorzugsweise in einer Konzentration von 50 bis 450 g/L, insbesondere in einer Konzentration von 100 bis 300 g/L.

Insbesondere umfasst die Komponente neben Dimethylsulfoxid wenigstens ein weiteres polares organisches Lösungsmittel, das unter den folgenden Gruppen ausgewählt ist: C₂-C₆-Alkylenglykole, Glycerin, Benzylalkohol, Hydroxy-C₂-C₄-alkylester aliphatischer C₁-C₄-Carbonsäuren, C₁-C₄-Alkoxy-C₂-C₄-alkylester aliphatischer C₁-C₄-Carbonsäuren, Milchsäure-C₁-C₄-alkylester und Oligo-C₂-C₄-alkylenglycolester aliphatischer C₁-C₁₀-Carbonsäuren, insbesondere unter Ethylenglykol, Propylenglykol,Glycerin, Benzylalkohol, Hydroxyethylestern und Hydroxypropylestern der Essigsäure oder der Propionsäure, Methoxyethylestern, Ethoxyethylestern, Methoxypropylestern und Ethoxypropylestern der Essigsäure oder der Propionsäure, Methyllactat, Ethyllactat und Oligoethylenglycolester und Oligopropylenglycolester der Essigsäure. Vorzugsweise liegt das Gewichtsverhältnis von Dimethylsulfoxid zu dem wenigstens einen weiteren polaren organischen Lösungsmittel im Bereich von 5 : 1 bis 1 : 5 und insbesondere im Bereich von 3 : 1 bis 1 : 3. In diesen Ausführungsformen enthalten die erfindungsgemäßen Pflanzenstärkungsmittel das weitere polare organische Lösungsmittel vorzugsweise in einer Konzentration von 50 bis 450 g/L, insbesondere in einer Konzentration von 100 bis 300 g/L.

Eine besonders bevorzugte Gruppe an Ausführungsformen der Erfindung betrifft solche Pflanzenstärkungsmittel, in denen die Komponente E Dimethylsulfoxid und Bezylalkohol umfasst. In diesen besonders bevorzugten Ausführungsformen enthalten die erfindungsgemäßen Pflanzenbehandlungsmittel das Dimethylsulfoxid vorzugsweise in einer Konzentration von 50 bis 350 g/L, insbesondere in einer Konzentration von 100 bis 300 g/L und den Benzylalkohol in einer Konzentration von 50 bis 350 g/L, insbesondere in einer Konzentration von 100 bis 300 g/L. Daneben kann die Komponente E auch ein oder mehrere weitere, von Dimethylsulfoxid und Benzylalkohol verschiedene organische polare Lösungsmittel enthalten. Die Konzentration dieser weitere Lösungsmittel wird, sofern vorhanden, vorzugsweise 200 g/L nicht überschreiten und liegt insbesondere im Bereich von 20 bis 200 g/L und insbesondere im Bereich von 50 bis 150 g/L. Bevorzugte weitere organische polare Lösungsmittel sind vor allem C₂-C₆-Alkylenglykole, insbesondere Ethylenglykol oder Propylenglykol, und Glycerin.

Neben den vorgenannten Komponenten können die erfindungsgemäßen Pflanzenstärkungsmittel auch einen oder mehrere weitere Bestandteile enthalten, wie Sie üblicherweise in Pflanzenbehandlungsmitteln eingesetzt werden. Hierzu zählen Stabilisatoren, beispielsweise phenolische Antioxidantien wie tert.-Butylhydroxytoluol (BHT) oder tert.-Butylhydroxyanisol (BHA), Biozide und Konservierungsmittel, beispielsweise Salicylsäure und deren Salze, Isothiazolone sowie Ascorbinsäure und deren Salze. Vorzugsweise wird die Gesamtkonzentration dieser Mittel insgesamt 50 g/L nicht übersteigen.

Die Herstellung der erfindungsgemäßen Pflanzenstärkungsmittel kann in Analogie zu bekannten Verfahren der Formulierungstechnik erfolgen. In der Regel wird man hierzu die Komponenten der erfindungsgemäßen Pflanzenstärkungsmittel miteinander vermischen, wobei die Reihenfolge der Zugabe beim Vermischen grundsätzlich beliebig ist Vorzugsweise wird man so vorgehen, dass man die Komponenten A, B, C und gegebenenfalls D und E zusammengibt und solange rührt bis eine homogene Mischung erhalten wird. Vorzugsweise wird man zunächst die Komponenten A, B und gegebenenfalls D zusammengeben und hierzu die C und gegebenenfalls die Komponente D und C geben, wobei man vorzugsweise die Komponenten C als letzte Komponente in die Formulierung einarbeitet.

Die Erfindung betrifft auch die Verwendung eines Pflanzenstärkungsmittels nach einem der vorhergehenden Ansprüche zur Erhöhung der Toleranz von Nutzpflanzen gegenüber Stressereignissen, insbesondere gegenüber chemisch induziertem Stress, kälteinduziertem Stress, durch Trockenheit induziertem Stress oder Licht-induziertem Stress.

Zur erfindungsgemäßen Verwendung wird man die Pflanzenstärkungsmittel in an sich bekannter Weise applizieren, d. h. man wird die Pflanze oder ihren Lebensraum mit einem erfindungsgemäßen Pflanzenstärkungsmittel behandeln.

Die erfindungsgemäßen Pflanzenstärkungsmittel sind für eine Applikation bei allen höheren Pflanzen und ebenfalls unabhängig von der Anbauregion, dem Klima oder dem Boden anwendbar. Sie können, abhängig vom Ort und Pflanzenteil der Applikation, mit an sich bekannten und in der landwirtschaftlichen Praxis üblichen Geräten appliziert werden, z. B. vorzugsweise als wässrige Verdünnung, d. h. als Spritzlösung oder Spritzbrühe.

Bevorzugt behandelt man die Pflanzen, insbesondere die oberirdischen Pflanzenteile, beispielsweise die gesamte oberirdischen Pflanzenteile oder einzelne Pflanzenteile wie Blattwerk, Triebe, Knospen, Blüten oder Früchte.

Vorzugsweise erfolgt die Behandlung vor einem zu erwartenden Stressereignis, wobei die Behandlung insbesondere zu einem Zeitpunkt erfolgt, der wenige Stunden bis mehrere Tage, insbesondere 12 h bis 120 h, speziell 24 h bis 72 h vor einem zu erwartenden Stressereignis, beispielsweise einer zu erwartenden Hitze- oder Trockenperiode oder einer geplanten Ausbringung eines Pflanzenschutzmittels, das bekanntermaßen phytotoxische Nebenwirkungen zeigen kann, liegt. Selbstverständlich kann auch eine rein prophylaktische Behandlung ohne ein zu erwartendes Stressereignis vorgenommen werden. Ebenso kann eine Behandlung während eines Stressereignisses vorgenommen, insbesondere als Folgebehandlung zu einer vor dem Stressereignis liegenden Erstbehandlung.

Bei der erfindungsgemäßen Verwendung wird das erfindungsgemäße Pflanzenstärkungsmittel vorzugsweise in Form einer wässrigen Verdünnung appliziert, wobei in Abhängigkeit von den weiteren Bestandteilen die Komponente A in diesen wässrigen Verdünnungen in emulgierter oder suspendierter Form vorliegt.

Hinsichtlich der Menge der erfindungsgemäß verwendeten Komponente A ist darauf zu achten, dass Überkonzentrationen an Vitamin E-Verbindungen phytotoxische Wirkungen hervorrufen können. Die Konzentration der Komponente A bzw. die Menge an Wasser zum Verdünnen wird deshalb vorzugsweise in so gewählt, das die Konzentration an Komponente A in der Verdünnung erwartungsgemäß keine nennenswerten phytotoxischen Effekte hervorruft. Vorzugsweise liegt die Konzentration der Komponente A in der wässrigen Verdünnung im Bereich von 0,001 bis 5 Gew.-%, insbesondere 0,01 bis 1 Gew.-%, und speziell 0,05 bis 0,25 Gew.-%, bezogen auf die wässrige Verdünnung, beträgt. Aus dem bevorzugten Verhältnis von Komponente A zu Komponente B resultiert daraus dann auch die erfindungsgemäß bevorzugte Konzentration an oberflächenaktivem Mittel und der übrigen Komponenten. Vorzugsweise wird das Pflanzenstärkungsmittel in einer Menge appliziert, dass die Aufwandmenge an Komponente A 100 bis 1.000 g/ha beträgt.

Die Applikation der erfindungsgemäßen Pflanzenstärkungsmittel kann alleine oder auch in Kombination mit einem oder mehreren Pflanzenschutzmitteln, die einen oder mehrere für den Pflanzenschutz und/oder als Wachstumsregulator geeignete Wirkstoffe enthalten, erfolgen. Dazu kann das erfindungsgemäße Mittel in Form der erfindungsgemäßen Formulierung einem oder mehreren anderen Pflanzenschutzmitteln, die derartige Wirkstoffe enthalten, und das ebenfalls als Konzentrat vorliegen kann, zugemischt werden, und die Mischung dann, gegebenenfalls nach entsprechender Verdünnung, appliziert werden.

Die erfindungsgemäßen Pflanzenstärkungsmittel können in Kombination mit einem oder mehreren anderen Pflanzenschutzmitteln gleichzeitig mit diesem, z. B. als Mischung, appliziert werden, oder wird vorzugsweise vor der Applikation der anderen Pflanzenschutzmittel appliziert, z. B. 1 bis 2 Tage vor Applikation der anderen Agrochemikalien. Das erfindungsgemäße Pflanzenstärkungsmittel kann, gegebenenfalls zusammen mit einem anderen Pflanzenschutzmittel, auf die ganze Pflanze, den Stamm, die Wurzeln, die Samen, die Früchte, die Triebe und/oder auf dem Wachstumsboden appliziert werden, bevorzugt ist aber eine Applikation auf die Blätter.

Die erfindungsgemäßen Pflanzenstärkungsmittel besitzen außerdem auch eine hervorragende Lagerstabilität, und in der Applikationsform, z. B. der Spritzbrühe, ist der Wirkstoff, d. h. die Komponente A mindestens so lange stabil, bis eine ausreichende Menge des Wirkstoffs von der Pflanze aufgenommen worden ist.

Erfindungsgemäß wird somit ein Mittel bereitgestellt, mit dem die durch Agrochemikalien und/oder Umwelttoxine sowie durch ungünstige Klimabedingungen (bspw. Hitze, Frost) hervorgerufene Phytotoxizität inhibiert oder zumindest stark vermindert werden kann. Auf diese Weise lässt sich die Qualität der Pflanzen und ihrer Produkte steigern, und die Leistungsfähigkeit von Nutzpflanzen kann erhöht und ihre Erntemenge gesteigert werden.

Die folgenden Beispiele dienen der Erläuterung der Erfindung:

Es wurden folgende Einsatzstoffe verwendet:
DL-α-Tocopherol der Fa. S. Goldmann GmbH und Co KG, Bielelfeld (96 %-iges Öl)
Emulgator: Ethoxyliertes Rizinusöl (40 EO-Einheiten) (Marlowet® R40 der Fa. Sasol Olefins and Surfactants GmbH, Hamburg
Borethanolamin (10 Gew.-% Bor): COMPO EXPERT, Krefeld;
UV-Filter 1: 4-Methoxyzimtsäure-2-ethylhexylester (Neoheliopan AV > 98 %) der Fa. Cosnaderm Chemische Rohstoffe, Ladenburg;
UV-Filter 2: Ferulasäure > 98 % der Firma Carl Roth GmbH und Co KG, Karlsruhe.

Es wurden die folgende Formulierungen F1, F2, FV1 und FV2 durch Vermischen der in Tabelle 1 angegebenen Bestandteile hergestellt. Die in Tabelle 1 angegebenen Werte sind die relativen Mengen der Bestandteile in Gewichtsteilen. Das Vermischen der Bestandteile erfolgte in der angegebenenen Reihenfolge:
Formulierung FV1: DL-α-Tocopherol, Emulgator, Dimethylsulfoxid, Benzylalkohol, Ethylenglykol.
Formulierungen FV2: DL-α-Tocopherol, Emulgator, Dimethylsulfoxid, Benzylalkohol, UV-Filter 1, UV-Filter 2;
Formulierung F1: Zugabe von Borethanolamin zur Formulierung FV1.
Formulierung F2: Zugabe von Borethanolamin zur Formulierung FV2.

**Tabelle 1:**

| Komponente | FV1 | F1 | FV2 | F2 |
|---|---|---|---|---|
| DL-α-Tocopherol | 200 | 200 | 210 | 210 |
| Emulgator | 140 | 140 | 140 | 140 |
| Dimethylsulfoxid | 200 | 200 | 200 | 200 |
| Benzylalkohol | 150 | 150 | 150 | 150 |
| Ethylenglykol | 90 | 90 | -- | -- |
| Borethanolamin | -- | 210 | -- | 210 |
| UV-Filter 1 | -- | -- | 40 | 40 |
| UV-Filter 2 | -- | -- | 40 | 40 |

### Untersuchung der Wirkung gegen Stressereignisse:

Für die folgenden Untersuchungen wurden Tocopherolhaltige Formulierungen mit Wasser auf eine Tocopherolkonzentration auf 0,25 Gew.-% verdünnt.

Borethanolamin wurde mit Wasser auf eine Konzentration von 0,25 Gew.-% verdünnt.

Für die Untersuchungen des Schutzes von Blüten wurden frisch abgetrennte Zweige mit 20 bis 50 Blüten (Blütenstadium BBCH 60 - 69) verwendet. Die Zweige wurden bis zur Tropfnässe mittels einer Handspritze mit der wässrigen Verdünnung der jeweiligen Formulierung besprüht.

Für die Untersuchungen des Schutzes von Jungpflanzen wurden Setzlinge von Tomaten- bzw. Paprikapflanzen in Pflanzerde gepflanzt und unter regelmäßiger Bewässerung und Nährstoffversorgung bis zu einer Wuchshöhe von ca. 15 bis 25 cm kultiviert. Die Pflanzen wurden bis zur Tropfnässe mittels einer Handspritze mit der wässrigen Verdünnung der jeweiligen Formulierung besprüht.

Für die Freilandversuche wurden die Formulierungen mit Leitungswasser in einer Menge von 100 L pro kg Formulierung verdünnt. Die Pflanzen wurden mit der wässrigen Verdünnung mit Hilfe einer handelsüblichen Pflanzenschutzspritze in einer Aufwandmenge von 0,25 kg Tocopherol/ha besprüht.

### Wirkung auf Frostschutz

Die Prüfungen der Formulierungen bezüglich ihrer Frostschutzwirkung erfolgten unter kontrollierten Bedingungen in Frostkammern mit Obstbaumblüten (Apfel (Sorte Elstar), abgetrennte Zweige, Süßkirsche (Sorte Hedelfinger), abgetrennte Zweige).

Die Obstbäume wurden 24 Stunden vor dem Frostereignis durch Besprühen der Blüten mit der verdünnten Formulierung behandelt.
(a) Kontrolle (unbehandelt),
(b) Behandlung mit Formulierung FV1 (0,25 g/l Tocopherol),
(c) Behandlung mit Formulierung F1 (0,25 g/l Tocopherol) + 0,25 g/l Borethanolamin),

Die Zweige wurden kurz vor dem Test von der Pflanze abgetrennt und anschließend für einen definierten Zeitraum (4 Stunden) einer Temperatur von -2 °C ausgesetzt. Am folgenden Tag wurden die relative Anzahl der Blüten mit frostbedingten Schäden visuell bestimmt. Als Schädigungen gelten Verbräunungen des Blütengewebes (Blütenstiel und Ovarien).

Unbehandelte Kirschblüten waren zu 100 % geschädigt, wohingegen 73 % der mit der Vergleichsformulierung FV1 behandelten Blüten und 65 % der mit der Formulierung F1 behandelten Blüten geschädigt waren.

Unbehandelte Apfelblüten waren zu 75 % geschädigt, wohingegen 80 % der mit der Vergleichsformulierung FV1 behandelten Blüten und 72 % der mit der Formulierung F1 behandelten Blüten geschädigt waren.

Die Behandlung mit verdünnten wässrigen Borethanolamin Aufbereitung (0,25 kg/ha) erbrachte keine signifikante Veränderung gegenüber der Kontrolle.

In gleicher Weise können im Freiland die Mittel zur Obstbaumblüte sowie zum Schutz von Jungpflanzen an verschiedenen Standorten untersucht werden.

### Wirkung auf Sonnenbrandschutz

### a) Versuche im Gewächshaus:

Die Prüfungen der Formulierungen bezüglich ihrer Sonnenschutzwirkung erfolgten unter kontrollierten Bedingungen an Früchten (Apfel) oder an Pflanzen. Die Früchte bzw. die Pflanzen wurden kurzzeitig (1 bis 2 Stunden) einer definierten UVA/UVB Strahlendosis ausgesetzt. Anschließend wurden die strahlungsbedingten Schäden (Fruchtschalenverfärbungen, Verfärbung des Blattgewebes, Gesamthabitus der Pflanze) gemäß folgender Skala von 0 bis 3 bonitiert. Es wurden die folgenden Formulierungen eingesetzt: Behandlungen: (a) Kontrolle (kein Testmittel), (b) Formulierung FV2 ohne Zusatz von Borethanolamin, (c) Formulierung F2 mit Zusatz von Borethanolamin, d) Borethanolamin.

| | |
|---|---|
| 0 | keine Schädigung der Fruchtschale/Pflanze |
| 1 | leichte Schädigung der Fruchtschale/Pflanze |
| 2 | mittlere Schädigung der Fruchtschale/Pflanze |
| 3 | starke Schädigung der Fruchtschale/Pflanze |

### b) Versuche im Freiland an Äpfeln

Die Untersuchung erfolgte in einer Apfelplantage in Südafrika (Region Somerset-West) im Februar.

Hierzu wurden in Parallelversuchen Apfelbäume der Sorte "Granny Smith" 8 Tage vor der Ernte in zwei benachbarten Parzellen mit einer wässrigen Verdünnung der Formulierung F2 bzw. der Formulierung FV2 besprüht. Als Kontrolle dienten jeweils unbehandelte Bäume der gleichen Parzelle.

Zur Bestimmung der Schädigung wurden jeweils etwa 30 Früchte pro Baum der behandelten Bäume und der unbehandelten Bäume geerntet und begutachtet. Es wurde der Anteil der geschädigten Früchte der behandelten Bäume und der unbehandelten Bäume ermittelt des jeweiligen Versuchs ermittelt und daraus die prozentuale Verringerung der Schädigung ermittelt. Als Schädigung wurden rötliche und bräunliche Verfärbungen der Fruchtschale angesehen.

Im Versuch mit der Formulierung FV2 (ohne Borethanolamin) wurde eine 20 %-ige Verringerung der Schädigung erzielt. Im Versuch mit der Formulierung F2 wurde eine 47 %ige Verringerung der Schädigung erreicht.

Die Behandlung mit verdünnten wässrigen Borethanolamin Aufbereitung (0,25 kg/ha) erbrachte keine signifikante Veränderung gegenüber der Kontrolle.

### c) Versuche im Freiland an Mandarinen (Satsumas)

Die Untersuchung erfolgte in einer Obstplantage in Südafrika (Western Cape Region, Simondium) im Februar.

Hierzu wurden in Parallelversuchen Mandarinenbäume der Sorte "Satsuma" 6 Tage vor der Ernte in zwei benachbarten Parzellen mit einer wässrigen Verdünnung der Formulierung F2 bzw. der Formulierung FV2 besprüht. Als Kontrolle dienten jeweils unbehandelte Bäume der gleichen Parzelle.

Zur Bestimmung der Schädigung wurden jeweils etwa 30 Früchte pro Baum der behandelten Bäume und der unbehandelten Bäume geerntet und begutachtet. Es wurde der Anteil der geschädigten Früchte der behandelten Bäume und der unbehandelten Bäume ermittelt des jeweiligen Versuchs ermittelt und daraus die prozentuale Verringerung der Schädigung ermittelt. Als Schädigung wurden gelbliche Verfärbungen der grünen Fruchtschale angesehen.

Im Versuch mit der Formulierung FV2 (ohne Borethanolamin) wurde keine Verringerung der Schädigung erzielt. Im Versuch mit der Formulierung F2 wurde eine 66 %ige Verringerung der Schädigung erreicht.

Die Behandlung mit verdünnten wässrigen Borethanolamin Aufbereitung (0,25 kg/ha) erbrachte keine signifikante Veränderung gegenüber der Kontrolle.

## Patentansprüche

1. Pflanzenstärkungsmittel in Form einer Formulierung, enthaltend
a) wenigstens ein Tocopherol oder ein Derivat eines Tocopherols (Komponente A);
b) wenigstens einen nichtionischen Emulgator (Komponente B); und
c) wenigstens eine wasserlösliche Borverbindung (Komponente C).

2. Pflanzenstärkungsmittel nach Anspruch 1, enthaltend α-Tocopherol.

3. Pflanzenstärkungsmittel nach einem der vorhergehenden Ansprüche, worin die Komponente B ausgewählt ist unter poly-C₂-C₃-alkoxylierten C₃-C₁₈-Alkylphenolen, poly-C₂-C₃-alkoxylierten C₁₀-C₂₂- Fettalkoholen, poly-C₂-C₃-alkoxylierten C₁₀-C₂₂-Fettsäureestern, Copolymere von Propylenoxid/Ethylenoxid, Sucroglyceride, polyethoxylierte C₁₀-C₂₂-Fettsäureestern von Sorbitan, polyethoxylierten Lanolinalkoholen, C₈-C₁₆-Alkylpolyglucosiden, poly-C₂-C₃-alkoxylierten Triglyceriden aliphatischer C₁₀-C₂₂-Hydroxycarbonsäuren und deren Mischungen.

4. Pflanzenstärkungsmittel nach Anspruch 3, worin die Komponente B wenigstens ein Rizinusölethoxylat umfasst.

5. Pflanzenstärkungsmittel nach einem der vorhergehenden Ansprüche, worin die Komponente C ausgewählt ist unter Alkalimetallboraten, Borsäure und Borsäureestern.

6. Pflanzenstärkungsmittel nach einem der vorhergehenden Ansprüche, worin das Gewichtsverhältnis von Komponente A zu Komponente B im Bereich von 1:1 bis 10:1, insbesondere im Bereich von 1:1 bis 3:1 liegt.

7. Pflanzenstärkungsmittel nach einem der vorhergehenden Ansprüche, enthaltend die Komponente A und die Komponente C in einem solchen Mengenverhältnis, dass der Gewichtsanteil der Komponente A zu dem Borgehalt der Komponente C, gerechnet als B₂O₃, im Bereich von 1 : 2 bis 5 : 1, insbesondere im Bereich von 3 : 4 bis 4 : 1 liegt.

8. Pflanzenstärkungsmittel nach einem der vorhergehenden Ansprüche, enthaltend zusätzlich einen organischen UV-Absorber als Komponente D.

9. Pflanzenstärkungsmittel nach einem der vorhergehenden Ansprüche, enthaltend zusätzlich wenigstens ein polares organisches Lösungsmittel als Komponente E.

10. Pflanzenstärkungsmittel nach Anspruch 9, worin die Komponente E ausgewählt ist unter C₂-C₆-Alkylenglykolen, Glycerin, Benzylalkohol, Dimethylsulfoxid, Hydroxy-C₂-C₄-alkylestern aliphatischer C₁-C₄-Carbonsäuren, C₁-C₄-Alkoxy-C₂-C₄-alkylestern aliphatischer C₁-C₄-Carbonsäuren, Milchsäure-C₁-C₄-alkylestern und Oligo-C₂-C₄-alkylenglycolestern aliphatischer C₁-C₁₀-Carbonsäuren.

11. Pflanzenstärkungsmittel nach Anspruch 9 oder 10, worin die Komponente E Dimethylsulfoxid umfasst.

12. Pflanzenstärkungsmittel nach einem der vorhergehenden Ansprüche, enthaltend:
a) 50 bis 500 g/L der Komponente A;
b) 50 bis 400 g/L der Komponente B; und
c) 5 bis 50 g/L der Komponente C, gerechnet als elementares Bor;
sowie gegebenenfalls
d) 50 bis 250 g/L der Komponente D und/oder
e) 100 bis 400 g/L der Komponente E.

13. Verwendung eines Pflanzenstärkungsmittels nach einem der vorhergehenden Ansprüche zur Erhöhung der Toleranz von Nutzpflanzen gegenüber Stressereignissen, insbesondere gegenüber chemisch induziertem Stress, kälteinduziertem Stress, durch Trockenheit induziertem Stress oder Licht-induziertem Stress.

14. Verwendung nach Anspruch 13, wobei man das Pflanzenstärkungsmittel vor dem zu erwartenden Stressereignis appliziert.

15. Verfahren zur Behandlung von Pflanzen, bei dem man die Pflanze oder ihren Lebensraum mit einem Pflanzenstärkungsmittel nach einem der Ansprüche 1 bis 12 behandelt.

## Claims

1. A plant strengthener in the form of a formulation containing
a) at least one tocopherol or a derivative of a tocopherol (component A);
b) at least one nonionic emulsifier (component B); and
c) at least one water-soluble boron compound (component C).

2. The plant strengthener as claimed in claim 1, containing α-tocopherol.

3. The plant strengthener as claimed in any of the preceding claims, wherein component B is selected among poly-C₂-C₃-alkoxylated C₃-C₁₈-alkylphenols, poly-C₂-C₃-alkoxylated C₁₀-C₂₂-fatty alcohols, poly-C₂-C₃-alkoxylated C₁₀-C₂₂-fatty acid esters, copolymers of propylene oxide/ethylene oxide, sucroglycerides, polyethoxylated C₁₀-C₂₂-fatty acid esters of sorbitan, polyethoxylated lanolin alcohols, C₈-C₁₆-alkylpolyglucosides, poly-C₂-C₃-alkoxylated triglycerides of aliphatic C₁₀-C₂₂-hydroxycarboxylic acids and their mixtures.

4. The plant strengthener as claimed in claim 3, wherein component B comprises at least one castor oil ethoxylate.

5. The plant strengthener as claimed in any of the preceding claims, wherein component C is selected among alkali metal borates, boric acid and boric esters.

6. The plant strengthener as claimed in any of the preceding claims, wherein the weight ratio of component A to component B is in the range of from 1:1 to 10:1, in particular in the range of from 1:1 to 3:1 by weight.

7. The plant strengthener as claimed in any of the preceding claims, containing component A and component C in such a weight ratio that the proportion of component A to the boron content of component C, calculated as B₂O₃, is in the range of from 1:2 to 5:1, in particular in the range of from 3:4 to 4:1 by weight.

8. The plant strengthener as claimed in any of the preceding claims, additionally containing an organic UV absorber as component D.

9. The plant strengthener as claimed in any of the preceding claims, additionally containing at least one polar organic solvent as component E.

10. The plant strengthener as claimed in claim 9, wherein component E is selected among C₂-C₆-alkylene glycols, glycerol, benzyl alcohol, dimethyl sulfoxide, hydroxy C₂-C₄-alkyl esters of aliphatic C₁-C₄-carboxylic acids, C₁-C₄-alkoxy-C₂-C₄-alkyl esters of aliphatic C₁-C₄-carboxylic acids, C₁-C₄-alkyl esters of lactic acid and oligo-C₂-C₄-alkylene glycol esters of aliphatic C₁-C₁₀-carboxylic acids.

11. The plant strengthener as claimed in claim 9 or 10, wherein component E comprises dimethyl sulfoxide.

12. The plant strengthener as claimed in any of the preceding claims, containing:
a) 50 to 500 g/l of component A;
b) 50 to 400 g/l of component B; and
c) 5 to 50 g/l of component C, calculated as elemental boron;
and, if appropriate,
d) 50 to 250 g/l of component D and/or
e) 100 to 400 g/l of component E.

13. The use of a plant strengthener as claimed in any of the preceding claims for increasing the tolerance of crop plants to stress events, in particular to chemically induced stress, cold-induced stress, drought-induced stress or light-induced stress.

14. The use as claimed in claim 13, wherein the plant strengthener is applied before the stress event to be expected.

15. A method for the treatment of plants, in which the plant or its environment is treated with a plant strengthener as claimed in any of claims 1 to 12.

## Revendications

1. Fortifiant pour plantes sous la forme d'une formulation, contenant :
a) au moins un tocophérol ou un dérivé d'un tocophérol (composant A) ;
b) au moins un émulsifiant non ionique (composant B) ; et
c) au moins un composé de bore soluble dans l'eau (composant C).

2. Fortifiant pour plantes selon la revendication 1, contenant de l'α-tocophérol.

3. Fortifiant pour plantes selon l'une quelconque des revendications précédentes, dans lequel le composant B est choisi parmi les alkylphénols en C₃-C₁₈ polyalcoxylés en C₂-C₃, les alcools gras en C₁₀-C₂₂ polyalcoxylés en C₂-C₃, les esters d'acides gras en C₁₀-C₂₂ polyalcoxylés en C₂-C₃, les copolymères d'oxyde de propylène/oxyde d'éthylène, les sucroglycérides, les esters d'acides gras en C₁₀-C₂₂ de sorbitane polyéthoxylés, les alcools lanoliniques polyéthoxylés, les polyglucosides d'alkyle en C₈-C₁₆, les triglycérides polyalcoxylés en C₂-C₃ d'acides hydroxycarboxyliques aliphatiques en C₁₀-C₂₂ et leurs mélanges.

4. Fortifiant pour plantes selon la revendication 3, dans lequel le composant B comprend au moins un éthoxylate d'huile de ricin.

5. Fortifiant pour plantes selon l'une quelconque des revendications précédentes, dans lequel le composant C est choisi parmi les borates de métaux alcalins, l'acide borique et les esters de l'acide borique.

6. Fortifiant pour plantes selon l'une quelconque des revendications précédentes, dans lequel le rapport en poids entre le composant A et le composant B se situe dans la plage allant de 1:1 à 10:1, notamment dans la plage allant de 1:1 à 3:1.

7. Fortifiant pour plantes selon l'une quelconque des revendications précédentes, contenant le composant A et le composant C en un rapport tel que la proportion en poids du composant A par rapport à la teneur en bore du composant C, calculé en tant que B₂O₃, se situe dans la plage allant de 1:2 à 5:1, notamment dans la plage allant de 3:4 à 4:1.

8. Fortifiant pour plantes selon l'une quelconque des revendications précédentes, contenant en outre un absorbeur UV organique en tant que composant D.

9. Fortifiant pour plantes selon l'une quelconque des revendications précédentes, contenant en outre au moins un solvant organique polaire en tant que composant E.

10. Fortifiant pour plantes selon la revendication 9, dans lequel le composant E est choisi parmi les alkylène glycols en C₂-C₆, la glycérine, l'alcool benzylique, le diméthylsulfoxyde, les esters hydroxyalkyliques en C₂-C₄ d'acides carboxyliques aliphatiques en C₁-C₄, les esters alcoxy en C₁-C₄-alkyliques en C₂-C₄ d'acides carboxyliques aliphatiques en C₁-C₄, les esters alkyliques en C₁-C₄ de l'acide lactique et les oligo-alkylène glycol en C₂-C₄-esters d'acides carboxyliques aliphatiques en C₁-C₁₀.

11. Fortifiant pour plantes selon la revendication 9 ou 10, dans lequel le composant E comprend du diméthylsulfoxyde.

12. Fortifiant pour plantes selon l'une quelconque des revendications précédentes, contenant :
a) 50 à 500 g/l du composant A ;
b) 50 à 400 g/l du composant B ; et
c) 5 à 50 g/l du composant C, calculé en tant que bore élémentaire ;
ainsi qu'éventuellement
d) 50 à 250 g/l du composant D et/ou
e) 100 à 400 g/l du composant E.

13. Utilisation d'un fortifiant pour plantes selon l'une quelconque des revendications précédentes pour augmenter la tolérance de plantes utiles à des événements de stress, notamment au stress induit chimiquement, au stress induit par le froid, au stress induit par la sécheresse ou au stress induit par la lumière.

14. Utilisation selon la revendication 13, dans lequel le fortifiant pour plantes est appliqué avant l'évènement de stress attendu.

15. Procédé de traitement de plantes, selon lequel les plantes ou leur habitat est traité avec un fortifiant pour plantes selon l'une quelconque des revendications 1 à 12.
